# FASCICULE DE BREVET EUROPEEN

(11) **EP 1 711 559 B1**
(45) Date de publication et mention de la délivrance du brevet: **02.06.2010**
(21) Numéro de dépôt: 05701147.0
(22) Date de dépôt: 20.01.2005
(51) Int. Cl.: D06M 15/227, D06M 15/643, D06M 15/263, C08L 35/02, C08L 23/30, C08L 83/04

(54) **COMPOSITION POUR FILS; FILS A PROPRIETES AMELIOREES ET UTILISATION DE CES FILS**
ZUSAMMENSETZUNG FÜR GARNE, GARNE MIT VERBESSERTEN EIGENSCHAFTEN UND VERWENDUNG DAVON
COMPOSITION FOR YARNS, YARNS HAVING IMPROVED PROPERTIES AND USE THEREOF

(30) Priorité: 22.01.2004 FR 0400604
(43) Date de publication de la demande: 18.10.2006
(73) Titulaire: Nexis Fibers AG, 6020 Emmenbrücke (CH)
(72) Inventeur: WATTENHOFER, Christian, CH-6343 BUONAS (CH); SCHAFFNER, Paul, CH-6010 KRIENS (CH)
(74) Mandataire: Bohest AG
(86) Numéro de dépôt international: PCT/EP2005/000667
(87) Numéro de publication internationale: WO 2005/075559

(56) Documents cités:
- EP-A- 0 244 500
- WO-A-03/033811
- WO-A-03/066959

## Description

L'invention concerne une composition pour fils, fibres, filaments pouvant être déposée sur ces fils, fibres, filaments, afin d'améliorer les propriétés de ces fils, fibres, filaments, notamment la résistance à l'abrasion. L'invention concerne également un procédé d'obtention de ces fils, fibres et filaments, ainsi qu'une corde comprenant ces fils, fibres et filaments, et leur utilisation.

Les cordes, cordages, filins sont utilisés dans de nombreux domaines tels que le domaine maritime, le domaine de l'escalade etc. Ils peuvent par exemple être utilisés pour amarrer des bâteaux et navires, par exemple des bâtiments de plaisance.

Ces cordes, cordages, filins subissent d'importantes sollicitations mécaniques lors de leur utilisation, dues par exemple aux mouvements de la mer, aux manipulations de la corde par les utilisateurs etc. Par exemple une corde d'amarrage subit différentes tensions en fonction du mouvement de la mer et du bateau. Cela occasionne notamment une friction entre les fibres de la corde, ce qui entraîne une abrasion des fibres. Il en résulte une usure rapide de ces cordes, cordages et filins, une réduction de la ténacité et éventuellement une rupture.

Aussi on cherche à améliorer la durée de vie de ces cordes, cordages, filins, notamment en améliorant les propriétés de résistance à l'abrasion des fibres de ces cordes, codages, filins.

Une composition à appliquer sur les fibres destinées à préprarer une corde ou un cordage, afin de diminuer l'abrasion des fibres, est connue. Elle est commercialisée par la société Goulston Technologies sous la référence Lurol NR-6025 ®.

L'invention propose une composition pouvant être déposée sur des fils, fibres, filaments destinés par exemple à être utilisés dans une corde ou un cordage, les fils, fibres, filaments de l'invention présentant une très bonne résistance à l'abrasion.

Selon un premier objet, l'invention concerne une composition pouvant être déposée sur des fils, fibres, filaments, comprenant les composés suivants :
a) une polyoléfine choisie dans le groupe comprenant le polyéthylène et le polypropylène
b) un polyorganosiloxane
c) un ester d'un copolymère obtenu à partir d'une α-oléfine comprenant entre 10 et 24 atomes de carbone et à partir d'un diacide carboxylique insaturé.

Selon un second objet, l'invention concerne des fils, fibres ou filaments traités par la composition de l'invention.

Dans un troisième objet, l'invention concerne un procédé de préparation de ces fils, fibres, filaments, comprenant les étapes suivantes :
1) filer le matériau constitutif du fil
2) éventuellement étirer le fil
3) éventuellement texturer le fil
   le fil étant traité à l'aide de la composition ci-dessus au cours du procédé.

Dans un quatrième objet, l'invention concerne une corde, un cordage, un filin obtenu à partir des fils, fibres, filaments de l'invention, et leur utilisation dans des dispositifs d'amarrage ou d'ancrage ou dans le domaine de l'escalade.

La composition de l'invention comprend comme composé a) une polyoléfine choisie dans le groupe comprenant le polyéthylène et le polypropylène. Avantageusement, le composé a) est une cire de polyéthylène. En particulier la cire de polyéthylène peut être oxydée.

Selon un mode de réalisation particulier de l'invention, ce composé a) est une cire de polyéthylène présentant une température de fusion comprise entre 110 et 150°C, de préférence comprise entre 120 et 150°C.

Avantageusement le composé a) est une cire de polyéthylène présentant une viscosité à 150°C comprise entre 1000 et 5000 mPa.s .

La composition comprend comme composé b) un polyorganosiloxane. De façon préférentielle, le composé b) est une huile silicone présentant une viscosité à 20°C comprise entre 100 et 1000 mPa*s. Le polyorganosiloxane peut par exemple être un polyméthylsiloxane ou un polyméthylphénylsiloxane.

La composition de l'invention comprend comme composé c) un ester d'un copolymère obtenu à partir d'une α-oléfine comprenant entre 10 et 24 atomes de carbone et à partir d'un diacide carboxylique insaturé.

L'ester peut être obtenu par estérification du copolymère obtenu à partir d'une α-oléfine comprenant entre 10 et 24 atomes de carbone et à partir d'un diacide carboxylique insaturé, à l'aide d'un composé hydroxylé. L'ester peut également être obtenu par addition d'un monomère lors de la préparation du copolymère ci-dessus.

L'α-oléfine utilisée pour préparer le composé c) comprend de préférence entre 12 et 18 atomes de carbone. Comme diacide carboxylique pouvant être utilisé pour la préparation du composé c), on peut citer l'acide maléique, l'acide fumarique, l'acide itaconique et l'acide citraconique. De préférence l'acide dicarboxylique est choisi parmi l'acide maléique et l'acide fumarique.

La viscosité du copolymère mesurée à 40°C est avantageusement comprise entre 100 et 1000 mPa.s, de préférence entre 250 et 400 mPa.s.

Selon un mode de réalisation particulier de l'invention, la composition comprend :
- x%=10 à 50% en poids de composé a), par rapport au poids total des composés a), b) et c) de la composition
- y%=10 à 50% en poids de composé c), par rapport au poids total des composés a), b) et c) de la composition
- z%=100-(x+y)% en poids de composé b), par rapport au poids total des composés a), b) et c) de la composition

Avantageusement x est compris entre 20 et 40 % et y est compris entre 20 et 40%.

La composition de l'invention peut être préparée selon toute méthode connue pour réaliser une composition.

Avant la réalisation de la composition, le composé a) peut être sous la forme d'une émulsion. Un émulsifiant peut être mis en oeuvre lors de la préparation de l'émulsion. On peut citer comme exemple d'émulsifiant un émulsifiant consistant en un alcool gras comprenant entre 10 et 20 atomes de carbone, l'alcool gras étant éthoxylé et comprenant 2 à 10 éthoxylates (EO).

Avant la réalisation de la composition, le composé b) peut être sous la forme d'une émulsion. L'émulsion peut être une émulsion du type « huile dans l'eau ». Le composé b) représente avantageusement entre 10 et 60% en poids par rapport au poids de l'émulsion. Un émulsifiant peut être mis en oeuvre lors de la préparation de l'émulsion. On peut citer comme exemple d'émulsifiant pouvant convenir un alcool gras comprenant entre 10 et 20 atomes de carbone, éthoxylé comprenant 2 à 10 éthoxylates (EO).

La composition de l'invention peut être sous la forme d'une solution, d'une émulsion, d'une dispersion dans un liquide.

La composition peut par exemple être sous la forme d'une solution dans un solvant organique.

La composition peut également être sous la forme d'une émulsion dans un liquide, le liquide étant avantageusement de l'eau. Lorsque la composition est sous la forme d'une émulsion, des émulsifiants peuvent être mis en oeuvre lors de la préparation de la composition.

Lorsque la composition est sous la forme d'une émulsion dans l'eau, elle comprend généralement les composés a), b) et c), des émulsifiants et de l'eau. La partie de la composition qui n'est pas de l'eau comprend généralement entre 10 et 70% en poids de composés a), b), et c), et entre 30 et 90% en poids d'émulsifiants. Les proportions respectives des composés a), b), et c) sont les mêmes que celles décrites ci-dessus.

Selon un mode de réalisation particulier de l'invention, la composition peut comprendre, outre les composés a), b) et c), également une composition d'ensimage.

Les compositions d'ensimages convenables pour l'invention sont tous les ensimages classiquement utilisés dans le domaine du filage de polymères, en particulier du filage de polyamide ou de polyesters. Les compositions d'ensimages sont habituellement des huiles ou des émulsions aqueuses.

La composition de l'invention peut également comprendre d'autres composés que les composés a), b) et ou c) et éventuellement une composition d'ensimage, tels que des agents tensioactifs, antistatiques qui sont usuellement employés dans les compositions d'ensimage.

L'invention concerne, dans un second objet, des fils, fibres, filaments traités par une composition telle que décrite ci-dessus.

Les fils, fibre, filaments de l'invention peuvent être d'origine naturelle, artificielle et/ou synthétique. Ils peuvent également être de plusieurs origines : à titre d'exemple on peut citer un filé de fibres de polyamide et de coton.

Les fils, fibres, filaments de l'invention sont avantageusement à base de polymère thermoplastique. A titre d'exemple on peut citer comme (co) polymère thermoplastique convenable dans le cadre de l'invention : les polyoléfines, les polyesters, les polyoxydes d'alkylène, les polyoxyalkylènes, les polyhalogénoalkylènes, les poly(alkylène-phtalate ou téréphtalate), les poly(phény ou phénylène), poly(oxyde ou sulfure de phénylène), les acétates de polyvinyle, les alcools polyvinyliques, les halogénures de polyvinyle, les halogénures de polyvinylidène, les polyvinyles nitriles, les polyamides, les polyimides, les polycarbonates, les polysiloxanes, les polymères d'acide acrylique ou méthacrylique, les polyacrylates ou méthacrylates, les polymères naturels que sont la cellulose et ses dérivés, les polymères synthétiques tels que les élastomères synthétiques, ou les copolymères thermoplastiques comprenant au moins un monomère identique à l'un quelconque des monomères inclus dans les polymères sus-mentionnés, ainsi que les mélanges et/ou les alliages de tous ces (co)polymères.

Comme autres polymères thermoplastiques préférés de l'invention, on peut citer les polyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères.

Plus précisément, ces copolyamides peuvent être, par exemple, le polyadipamide d'hexaméthylène, les polyphtalamides obtenus à partir d'acide téréphtalique et/ou isophtalique tels que le polyamide commercialisé sous le nom commercial AMODEL, les copolyamides obtenus à partir d'acide adipique, d'hexaméthylène diamine et de caprolactame.

Avantageusement, le polymère thermoplastique est un polyester, tel que le polyéthylène téréphtalate (PET), le polypropylène téréphtalate (PPT), le polybutylène téréphtalate (PBT), leurs copolymères et mélanges.

De manière plus préférée encore, le polymère thermoplastique est sélectionné dans le groupe de (co)polyamides comprenant : le polyamide 6, le polyamide 6.6, le polyamide 4, le polyamide 11, le polyamide 12, les polyamides 4-6, 6-10, 6-12, 6-36, 12-12, leurs copolymères et mélanges.

Les fils, fibres et filaments de l'invention peuvent être à base d'un mélange de polymères thermoplastique ou de copolymères thermoplastiques.

Les fils, fibres, filaments de l'invention peuvent comprendre des additifs tels que des charges de renfort, des ignifugeants, des stabilisants aux UV, à la chaleur, des matifiants tels que le dioxyde de titane, des agents bioactifs etc.

La composition de l'invention présente à la surface du fil représente avantageusement entre 1 et 5% en poids par rapport au poids du fil.

Le titre global des fils de l'invention peut être choisi dans toute la gamme des tittres de fils habituels, par exemple entre 200 dtex et 3000 dtex. Selon un mode de réalisation particulier de l'invention, les fils, fibres, filaments de l'invention sont des fils qui présentent un titre global compris entre 700 et 2500 dtex.

Le titre au brin des fils de l'invention peut être choisi dans toute la gamme des titres de fils habituels. Le titre au brin est généralement supérieur ou égal à 0.3 dtex. Il est habituellement inférieur à l'équivalent en dtex d'un diamètre de 800 microns dans le cas de monofilaments de gros diamètre. Selon un mode de réalisation particulier de l'invention, les fils, fibres, filaments de l'invention sont des fils qui présentent un titre au brin compris entre 3 et 9 dtex.

L'invention concerne également un procédé de préparation des fils, fibres, filaments comprenant les étapes suivantes :
1) filer le matériau constitutif du fil
2) éventuellement étirer le fil
3) éventuellement texturer le fil
   le fil étant traité à l'aide de la composition telle que décrite ci-dessus au cours du procédé.

L'étape 1) de filage est réalisée selon toute méthode connue de l'homme du métier.

Lorsque le matériau du fil est un polymère thermoplastique, l'étape 1) est avantageusement une étape de filage à l'état fondu du polymère.

Les fils, fibres, filaments de l'invention peuvent subir un étirage. Ainsi le fil peut être étiré le long du chemin de filage selon tout procédé connu, au taux désiré selon l'orientation et les caractéristiques mécaniques que l'on souhaite lui conférer. Il peut aussi être simplement préorienté ou orienté au filage selon la vitesse finale de renvidage. Il peut être obtenu directement ou repris sur des rouleaux pour réguler la tension de renvidage, si cela s'avère utile ou nécessaire. L'étape 2) peut être réalisée de manière intégrée au filage ou non.

La vitesse de renvidage est généralement comprise entre 400 et 8000 m/min, avantageusemene comprise entre 600 et 5000 m/min, de préférence comprise entre 600 et 2000 m/min.

L'étape 3) de texturation peut être réalisée selon toute méthode connue de l'homme du métier.

L'étape de traitement peut être réalisée avant ou après l'éventuelle étape d'étirage. L'étape de traitement peut également être réalisée avant ou après l'éventuelle étape 3) de texturation.

Le traitement peut être réalisé selon les techniques habituelles telles que le dépôt par rouleaux ou à l'aide de gudulettes. Parmi les techniques habituelles, on pourra citer, à titre d'exemples et de manière non limitative, la technique de traitement de la fibre brute au rouleau, par spray ou vaporisation, par trempage, la technique du foulardage, ainsi que toute méthode utilisée dans l'industrie textile de traitement de fibres synthétiques. Ce traitement peut être effectué à différentes étapes de la manufacture des fils. Il s'agit entre autres de toutes les étapes où sont classiquement ajoutés des ensimages. On peut ainsi appliquer l'additif en bas de métier de filage avant renvidage. On peut aussi, dans le cas des procédés dit "fibres" appliquer l'additif avant, pendant ou après les étapes d'étirage, de frisage ou de séchage, etc....

Dans certains cas, il pourra en outre être avantageux de faire subir au fil un premier traitement préalable (prétraitement) selon des méthodes connues de l'homme du métier, afin de favoriser l'adhérence du copolymère greffé au fil. En outre, il pourra également être envisagé de faire subir au fil, avant ou après le traitement de l'invention, d'autres traitements chimiques ou physiques tels que par exemple irradiation, et autres.

Les fils, fibres, filaments traités par la composition de l'invention présentent une très bonne résistance à l'abrasion.

Dans un quatrième objet, l'invention concerne une corde, un cordage ou un filin comprenant au moins en partie les fil, fibres, filaments de l'invention.

La corde, le cordage ou le filin de l'invention peuvent être utilisés dans des dispositifs d'amarrage ou d'ancrage pour bateaux, navires, embarcadères flottants, pontons légers, bouées d'ancrage, de navigation ou de repérage.

En effet les fils, fibres, filaments de l'invention présentant une résistance à l'abrasion élevée, les cordes obtenues à l'aide de ces fils présentent une faible usure et une longue durée de vie, notamment lorsque ces cordes subissent des immersions répétées dans l'eau.

La corde, le cordage ou le filin de l'invention peuvent également être utilisés dans le domaine de l'escalade, dans lequel les cordes subissent des contraintes mécaniques importantes. Dans une corde d'escalade, les fils, fibres, filaments de l'invention sont avantageusement présents dans l'âme de la corde, par opposition à la gaine qui est généralement sous forme de fils tressés.

Les fils, fibres, filaments de l'invention peuvent également être utilisés dans des filets, tels que des filets de pêche ou des filets de sécurité. Ils peuvent également être utilisées dans des ceintures, telles que des ceintures de sécurité.

D'autres détails ou avantages de l'invention apparaîtront plus clairement au vu des exemples donnés ci-dessous uniquement à titre indicatif.

### Test de résistance à l'abrasion des fils, fibres, filaments

La norme utilisée pour mesurer la résistance à l'abrasion des fils est la norme ASTM D 6611-00. Les conditions de la norme utilisées lors du test sont les suivantes :
- Enroulement (« interwrapping »)du fil à tester : 3 tours (angle d'enroulement : 1080°)
- Amplitude du mouvement (« stroke ») du fil à tester : 6 cm
- Vitesse du moteur : 70 tours/min
- Tension exercée sur le fil par le poids : 445 cN

Le test est réalisé conformément à la norme ci-dessus dans des conditions sèches et humides telles que décrites dans la norme. Le test est également réalisé dans les conditions sèches de la norme, après un traitement du fil simulant une corde plongée dans l'eau puis séchée à l'air. Ce traitement est décrit ci-dessous.

### Traitement du fil simulant une corde plongée dans l'eau puis séchée à l'air

Le fil est immergé dans de l'eau distillée à température ambiante pendant 10 minutes, dont 1 minute sous agitation du fil. Le fil est ensuite posé sur un tissu de coton et séché à l'air pendant 24h à température ambiante.

### Méthode de mesure de la quantité de composition déposée sur le fil

La composition présente sur le fil est extraite à l'aide d'éther de pétrole présentant une température d'ébullition entre 30 et 50°C dans un appareillage type Soxhlet. L'extraction est cyclique, la durée d'un cycle étant comprise entre 6 et 10 minutes. La durée d'extraction est d'1 heure. Le rapport entre le poids d'échantillon et le poids de solvant est compris entre 1/10 et 1/20. Le poids de l'échantillon est compris entre 2 et 10g.

### EXEMPLES

### Exemple 1

Un fil en polyamide 6 commercialisé par la société Rhodia Industrial Yarns AG sous la référence T371 (1400f210 : 210 filaments de titre global 1400 dtex) est dévidé et traité par passage du fil sur un rouleau en rotation -le fil étant placé perpendiculairement à l'axe longitudinal du rouleau-, le rouleau étant en partie immergé dans un bain contenant une composition telle que décrite dans le tableau 1 ci-dessous. Le passage du fil sur le rouleau est réalisée selon une méthode classique. La vitesse globale de passage du fil est de 450 m/min, le fil étant guidé contre le rouleau et le guide effectuant un mouvement de va-et-vient suivant la direction de l'axe longitudinal du rouleau, afin d'optimiser le dépôt de la composition sur le fil.

**Tableau 1**

| Exemple | Composition | Quantité de composition présente sur le fil en poids (%) | Conditions sèches : durée avant rupture (min) | Conditions humides : durée avant rupture (min) | Conditions sèches après traitement: durée avant rupture (min) |
|---|---|---|---|---|---|
| Comparatif A | Aucune | - | 2 | 32 | 2 |
| Comparatif B | Composition 1 | 2.9 | 235 | 92 | 394 |
| 1 | Composition 2 | 3.1 | 413 | 125 | 631 |

Composition 1 : Emulsion comprenant 25% en poids de Lurol NR-6025® commercialisé par la société Goulston Technologies, dans de l'eau

Composition 2 (les pourcentages sont exprimés en poids par rapport au poids total de la composition ): Emulsion comprenant :
- 9% de cire de polyéthylène (composé a)) oxydée de température de fusion de 140°C
- 2.6 % d'émulsifiant du type alcool gras comprenant 13 atomes de carbone, éthoxylé comprenant 6 éthoxylates (EO), cet émulsifiant provenant d'une émulsion de la cire de polyéthylène ci-dessus avant préparation de la composition
- 6.5 % d'huile silicone (composé b)) présentant une viscosité à 20°C de 350 mPa.s, provenant d'une émulsion « huile dans l'eau » de cette huile silicone avant préparation de la composition, l'émulsion comprenant 10% en poids d'un émulsifiant du type alcool gras comprenant 13 atomes de carbone, éthoxylé comprenant 6 éthoxylates (EO)
- 9 % d'un ester d'un copolymère obtenu à partir d'une α-oléfine et d'un mélange d'acide maléique et d'acide fumarique, le copolymère présentant une viscosité à 40°C de 340 mPa.s, mesurée selon la norme ASTM D-445
- 9% d'émulsifiant du type huile de ricin hydratée comprenant entre 5 et 30 éthoxylates (EO)
- 9% d'émulsifiant du type amine grasse comprenant entre 6 et 20 atomes de carbone, éthoxylée comprenant 10 éthoxylates (EO)
- 54.9% d'eau désionisée
Cette émulsion est diluée dans un rapport 1/1 avec de l'eau distillée avant application sur le fil.

Le fil traité selon l'invention présente une très bonne résistance à l'abrasion, par rapport à un fil non traité ou à un fil traité selon l'art antérieur, que ce soit en conditions sèches, en conditions humides ou en conditions sèches après un traitement simulant l'immersion d'une corde dans l'eau.

### Exemples 2 et 3

Un fil en polyamide 6 commercialisé par la société Rhodia Industrial Yarns AG sous la référence : respectivement T771 pour l'exemple 2 (1400f210 : 210 filaments de titre global 1400 dtex) et T 371 pour l'exemple 3 (1880f280 : 280 filaments de titre global 1880), est traité par application sur le fil de la composition 3 telle que décrite ci-dessous, à l'aide de deux gudulettes positionnées l'une en face de l'autre. La vitesse globale de passage du fil est de 425 m/min. Le fil est ensuite bobiné.

**Tableau 2**

| Exemple | Composition | Quantité de composition présente sur le fil en poids (%) | Conditions sèches : durée avant rupture (min) | Conditions sèches après traitement: durée avant rupture (min) |
|---|---|---|---|---|
| 2 | Composition 3 | 2.4 | 519 *) | 894 *) |
| 3 | Composition 3 | 2.3 | 431 **) | 501 **) |

| | | | | |
|---|---|---|---|---|
| *) Moyenne sur 8 fils et sur 6 mesures par fil **) Moyenne sur 5 fils et sur 6 mesures par fil | | | | |

Composition 3 (les pourcentages sont exprimés en poids par rapport au poids total de la composition ): Emulsion comprenant :
- 5% de cire de polyéthylène (composé a)) oxydée de température de fusion de 140°C
- 1.3% d'émulsifiant du type alcool gras comprenant 13 atomes de carbone, éthoxylé comprenant 6 éthoxylates (EO), cet émulsifiant provenant d'une émulsion de la cire de polyéthylène ci-dessus avant préparation de la composition
- 3.4% d'huile silicone (composé b)) présentant une viscosité à 20°C de 350 mPa.s, provenant d'une émulsion « huile dans l'eau » de cette huile silicone avant préparation de la composition, l'émulsion comprenant 10% en poids d'un émulsifiant du type alcool gras comprenant 13 atomes de carbone, éthoxylé comprenant 6 éthoxylates (EO)
- 5% d'un ester d'un copolymère obtenu à partir d'une α-oléfine et d'un mélange d'acide maléique et d'acide fumarique, le copolymère présentant une viscosité à 40°C de 340 mPa.s, mesurée selon la norme ASTM D-445
- 5.3% d'émulsifiant du type huile de ricin hydratée comprenant entre 5 et 30 éthoxylates (EO)
- 5% d'émulsifiant du type amine grasse comprenant entre 6 et 20 atomes de carbone, éthoxylée comprenant 10 éthoxylates (EO)
- 75% d'eau désionisée
Le fil traité selon l'invention présente une très bonne résistance à l'abrasion, par rapport à un fil non traité ou à un fil traité selon l'art antérieur, que ce soit en conditions sèches ou en conditions sèches après un traitement simulant l'immersion d'une corde dans l'eau.

## Revendications

1. Composition comprenant les composés suivants :
a) une polyoléfine choisie dans le groupe comprenant le polyéthylène et le polypropylène
b) un polyorganosiloxane
c) un ester d'un copolymère obtenu à partir d'une α-oléfine comprenant entre 10 et 24 atomes de carbone et à partir d'un diacide carboxylique insaturé.

2. Composition selon la revendication 1, **caractérisée en ce que** le composé a) est une cire de polyéthylène.

3. Composition selon la revendication 1 ou 2, **caractérisée en ce que** le composé a) est une cire de polyéthylène présentant une température de fusion comprise entre 110 et 150°C, de préférence comprise entre 120 et 150°C.

4. Composition selon l'une des revendications précédentes, **caractérisée en ce que** le composé b) est une huile silicone présentant une viscosité à 20°C comprise entre 100 et 1000 mPa.s.

5. Composition selon l'une des revendications précédentes, **caractérisée en ce qu'**elle comprend :
- x%=10 à 50% en poids de composé a), par rapport au poids total des composés a), b) et c) de la composition
- y%=10 à 50% en poids de composé c), par rapport au poids total des composés a), b) et c) de la composition
- z%=100-(x+y)% en poids de composé b), par rapport au poids total des composés a), b) et c) de la composition.

6. Composition selon la revendication 5, **caractérisée en ce que** x est compris entre 20 et 40 % et y est compris entre 20 et 40 %.

7. Composition selon l'une des revendications précédentes, **caractérisée en ce que** la composition comprend en outre une composition d'ensimage.

8. Composition selon l'une des revendications précédentes, **caractérisée en ce qu'**elle est sous la forme d'une émulsion dans un liquide.

9. Composition selon la revendication 8, **caractérisée en ce que** le liquide est de l'eau.

10. Fils, fibres ou filaments, **caractérisés en ce qu'**ils sont traités à l'aide de la composition selon l'une des revendications 1 à 9.

11. Fils, fibres ou filaments selon la revendication 10, **caractérisés en ce qu'**il sont à base de polymère thermoplastique.

12. Fils, fibres ou filaments selon la revendication 11, **caractérisés en ce qu'**il sont à base de polyester ou de polyamide.

13. Fils, fibres ou filaments selon l'une des revendications 10 à 12, **caractérisés en ce que** la composition présente à la surface du fil représente entre 1 et 5% par rapport au poids du fil.

14. Fils, fibres, filaments selon l'une des revendications 10 à 13, **caractérisés en ce que** ce sont des fils présentant un titre global compris entre 700 et 2500 dtex.

15. Fils, fibres, filaments selon l'une des revendications 10 à 14, **caractérisés en ce que** ce sont des fils présentant un titre au brin compris entre 3 et 9 dtex.

16. Procédé de préparation des fils, fibres, filaments selon l'une des revendications 10 à 15, comprenant les étapes suivantes :
1) filer le matériau constitutif du fil
2) éventuellement étirer le fil
3) éventuellement texturer le fil
**caractérisé en ce que** l'on traite le fil à l'aide de la composition selon la revendication 1 au cours du procédé.

17. Procédé selon la revendication 16, **caractérisé en ce que** le matériau est un polymère thermoplastique et **en ce que** l'étape 1) est un filage à l'état fondu du polymère.

18. Procédé selon la revendication 16 ou 17, **caractérisé en ce que** l'étape de traitement est réalisée après les étapes 2) et 3).

19. Procédé selon la revendication 16 ou 17, **caractérisé en ce que** l'étape de traitement est réalisée avant les étapes 2) et 3).

20. Corde, cordage ou filin, **caractérisé en ce qu'**il comprend au moins des fils, fibres ou filaments selon l'une des revendications 10 à 15 ou des fils, fibres ou filaments obtenus par le procédé selon l'une des revendications 16 à 19.

21. Utilisation de la corde selon la revendication 20 dans des dispositifs d'amarrage ou d'ancrage pour bateaux, navires, embarcadères flottants, pontons légers, bouées d'ancrage, de navigation ou de repérage.

22. Utilisation de la corde selon la revendication 20 dans le domaine de l'escalade.

## Claims

1. A composition comprising the following compounds:
a) a polyolefin selected from the group comprising polyethylene and polypropylene,
b) a polyorganosiloxane,
c) an ester of a copolymer obtained from an α-olefin comprising 10 to 24 carbon atoms and from an unsaturated dicarboxylic acid.

2. Composition according to claim 1, **characterised in that** the compound a) is a polyethylene wax.

3. Composition according to claim 1 or 2, **characterised in that** the compound a) is a polyethylene wax having a melting point of 110 to 150°C, preferably of 120 to 150°C.

4. Composition according to one the preceding claims, **characterised in that** the compound b) is a silicone oil having a viscosity at 20°C of 100 to 1000 mPa.s.

5. Composition according to one of the preceding claims, **characterised in that** it comprises:
x %=10 to 50% by weight of compound a), with respect to the total weight of the compounds a), b) and c) of the composition,
y %=10 to 50% by weight of compound c), with respect to the total weight of the compounds a), b) and c) of the composition, and
z %=100-(x+y) % by weight of compound b), with respect to the total weight of the compounds a), b) and c) of the composition.

6. Composition according to claim 5, **characterised in that** x is from 20 to 40% and y is from 20 to 40%.

7. Composition according to one of the preceding claims, **characterised in that** the composition further comprises a sizing composition.

8. Composition according to one of the preceding claims, **characterised in that** it is in the form of an emulsion in a liquid.

9. The composition according to claim 8, **characterised in that** the liquid is water.

10. Yarns, fibres or filaments, **characterised in that** they have been treated with a composition according to one of claims 1 to 9.

11. Yarns, fibres or filaments according to claim 10, **characterised in that** they are based on thermoplastic polymer.

12. Yarns, fibres or filaments according to claim 11, **characterised in that** they are based on polyester or on polyamide.

13. Yarns, fibres or filaments according to one of claims 10 to 12, **characterised in that** the composition present on the surface of the yarn is 1 to 5%, with respect to the weight of the yarn.

14. Yarns, fibres or filaments according to one of claims 10 to 13, **characterised in that** they are yarns having an overall linear density of 700 to 2500 dtex.

15. Yarns, fibres or filaments according to one of claims 10 to 14, **characterised in that** they are yarns having filaments with linear density of 3 to 9 dtex.

16. A process for the preparation of yarns, fibres or filaments according to one of claims 10 to 15, comprising the following stages:
1) spinning the constituent material of the yarn,
2) optionally drawing the yarn,
3) optionally texturing the yarn,
**characterised in that** the yarn is treated with the composition according to claim 1 during the process.

17. Process according to claim 16, **characterised in that** the material is a thermoplastic polymer and **in that** stage 1) is a melt spinning of the polymer.

18. Process according to claim 16 or 17, **characterised in that** the treatment stage is carried out after stages 2) and 3).

19. Process according to claim 16 or 17, **characterised in that** the treatment stage is carried out before stages 2) and 3).

20. A rope, cable or line, **characterised in that** it comprises at least yarns, fibres or filaments according to one of claims 10 to 15 or yarns, fibres or filaments obtained by the process according to one of claims 16 to 19.

21. Use of the rope according to claim 20 in mooring or anchoring arrangements for boats, ships, floating landing stages, light pontoons, or in anchor, navigation or marker buoys.

22. Use of the rope according to claim 20 in the field of climbing.

## Patentansprüche

1. Zusammensetzung umfassend die folgenden Verbindungen:
a) Ein Polyolefin ausgewählt aus der Gruppe umfassend Polyethylen und Polypropylen,
b) ein Polyorganosiloxan,
c) einen Ester eines Copolymeren erhalten aus einem α-Olefin umfassend 10 bis 24 Kohlenstoffatome und aus einer ungesättigten Dicarbonsäure.

2. Zusammensetzung nach Anspruch 1, **dadurch gekennzeichnet, dass** die Verbindung a) ein Polyethylenwachs ist.

3. Zusammensetzung nach Anspruch 1 oder 2, **dadurch gekennzeichnet, dass** die Verbindung
a) ein Polyethylenwachs mit einem Schmelzpunkt von 110 bis 150°C, vorzugsweise von 120 bis 150°C ist.

4. Zusammensetzung nach einem der vorangehenden Ansprüche, **dadurch gekennzeichnet, dass** die Verbindung b) ein Silikonöl mit einer Viskosität bei 20°C von 100 bis 1000 mPa.s ist.

5. Zusammensetzung nach einem der vorangehenden Ansprüche, **dadurch gekennzeichnet, dass** sie umfasst:
x %=10 bis 50 Gewichtsprozente an Verbindung a), bezogen auf das Gesamtgewicht der Verbindungen a), b) und c) der Zusammensetzung,
y %=10 bis 50 Gewichtsprozente an Verbindung c), bezogen auf das Gesamtgewicht der Verbindungen a), b) und c) der Zusammensetzung, und
z %=100-(x+y) Gewichtsprozente an Verbindung b), bezogen auf das Gesamtgewicht der Verbindungen a), b) und c) der Zusammensetzung.

6. Zusammensetzung nach Anspruch 5, **dadurch gekennzeichnet, dass** x von 20 bis 40% und y von 20 bis 40% ist.

7. Zusammensetzung nach einem der vorangehenden Ansprüche, **dadurch gekennzeichnet, dass** die Zusammensetzung des Weiteren eine Leimungszusammensetzung umfasst.

8. Zusammensetzung nach einem der vorangehenden Ansprüche, **dadurch gekennzeichnet, dass** sie in Form einer Emulsion in einer Flüssigkeit ist.

9. Zusammensetzung nach Anspruch 8, **dadurch gekennzeichnet, dass** die Flüssigkeit Wasser ist.

10. Garne, Fasern oder Filamente, **dadurch gekennzeichnet, dass** sie mit einer Zusammensetzung nach einem der Ansprüche 1 bis 9 behandelt sind.

11. Garne, Fasern oder Filamente nach Anspruch 10, **dadurch gekennzeichnet, dass** sie auf thermoplastischem Polymer basieren.

12. Garne, Fasern oder Filamente nach Anspruch 11, **dadurch gekennzeichnet, dass** sie auf Polyester oder Polyamid basieren.

13. Garne, Fasern oder Filamente nach einem der Ansprüche 10 bis 12, **dadurch gekennzeichnet, dass** die auf der Oberfläche des Garns vorhandene Zusammensetzung 1 bis 5%, bezogen auf das Gewicht des Garns, beträgt.

14. Garne, Fasern oder Filamente nach einem der Ansprüche 10 bis 13, **dadurch gekenntzeichnet, dass** sie Garne mit einem Gesamttiter von 700 bis 2500 dtex sind.

15. Garne, Fasern oder Filamente nach einem der Ansprüche 10 bis 14, **dadurch gekennzeichnet, dass** sie Garne mit Filamenten mit einem Titer von 3 bis 9 dtex sind.

16. Verfahren zur Herstellung von Garnen, Fasern oder Filamenten nach einem der Ansprüche 10 bis 15, umfassend die folgenden Schritte:
1) Spinnen des Grundmaterials des Garns,
2) gewünschtenfalls Strecken des Garns,
3) gewünschtenfalls Texturieren des Garns,
**dadurch gekennzeichnet, dass** das Garn während des Verfahrens mit einer Zusammensetzung nach Anspruch 1 behandelt wird.

17. Verfahren nach Anspruch 16, **dadurch gekennzeichnet, dass** das Material ein thermoplastisches Polymer ist und dass Schritt 1) ein Schmelzspinnen des Polymers ist.

18. Verfahren nach Anspruch 16 oder 17, **dadurch gekennzeichnet, dass** der Behandlungsschritt nach den Schritten 2) und 3) durchgeführt wird.

19. Verfahren nach Anspruch 16 oder 17, **dadurch gekennzeichnet, dass** der Behandlungsschritt vor den Schritten 2) und 3) durchgeführt wird.

20. Seil, Tau oder Kabel, **dadurch gekennzeichnet, dass** es mindestens Garne, Fasern oder Filamente nach einem der Ansprüche 10 bis 15 oder Garne, Fasern oder Filamente erhalten nach dem Verfahren nach einem der Ansprüche 16 bis 19 umfasst.

21. Verwendung des Seils nach Anspruch 20 in Vertäuungs- oder Ankervorrichtungen für Boote, Schiffe, schwimmende Landungsstege, leichte Pontons oder für Anker-, Navigations-oder Signalbojen.

22. Verwendung des Seils nach Anspruch 20 auf dem Gebiet des Kletterns.
